Europäisches Patentamt

European Patent Office

Office européen des brevets

(19)

(11) Numéro de publication: **0 143 227**
**B1**

(12) **FASCICULE DE BREVET EUROPEEN**

(45) Date de publication du fascicule du brevet: 24.06.87

(51) Int. Cl.⁴: **G 04 C 13/11, H 02 K 16/02**

(21) Numéro de dépôt: **84110853.3**

(22) Date de dépôt: **12.09.84**

(54) **Moteur électromagnétique pas à pas à deux rotors couplés.**

(30) Priorité: **16.09.83 CH 5049/83**

(43) Date de publication de la demande:
**05.06.85 Bulletin 85/23**

(45) Mention de la délivrance du brevet:
**24.06.87 Bulletin 87/26**

(84) Etats contractants désignés:
**DE FR GB**

(56) Documents cités:
**EP - A - 0 092 521**

**PATENTS ABSTRACTS OF JAPAN, vol. 6, no. 211 (E-137)(1089), 23 octobre 1982**

(73) Titulaire: **Omega SA, Rue Stämpfli 96, CH-2500 Bienne (CH)**

(72) Inventeur: **Mai, Tu Xuan, Rue Blancherie 34, CH-1022 Chavannes (CH)**

(74) Mandataire: **de Raemy, Jacques et al, ICB Ingénieurs Conseils en Brevets SA Faubourg du Lac 6, CH-2501 Bienne (CH)**

ACTORUM AG

## Description

La présente invention est relative à un moteur électromagnétique pas à pas monophasé pour pièce d'horlogerie comprenant un stator, au moins un enroulement d'excitation bobiné sur un noyau associé au stator, deux ouvertures découpées dans le stator et présentant chacune deux épanouissements polaires et un rotor logé dans chacune des deux ouvertures pour être soumis au flux créé par l'enroulement, lesdits rotors étant formés chacun d'un aimant permanent aimanté diamétralement et comportant chacun un pignon engrenant avec une même roue de transmission.

Un moteur réondant à la définition générique qui vient d'être donnée est connu de l'exposé d'invention JP-A-57-116 577. Dans cet exposé, stator et noyau présentent la forme d'un U. L'enroulement d'excitation se trouve bobiné sur l'une des jambes du U et dans la partie inférieure de celui-ci. Deux paires d'épanouissements polaires sont formés de part et d'autre des jambes supérieures du U. Chaque paire d'épanouissement polaire contient un rotor formé d'un aimant permanent aimanté diamétralement. Chaque rotor engrène avec une roue de transmission commune par l'intermédiaire de pignons dont est équipé chacun des rotors. Par cette construction, l'invention citée vise à proposer un moteur à dimensions réduites ou à consommation réduite.

En effet pour comprendre cela, on rappellera ici que le couple mutuel aimant-bobiné Cab développé par le moteur est proportionnel au produit du flux mutuel $\Phi_{ab}$ dû à l'aimant par le nombre d'ampère-tours N · I dû à la bobine où N est le nombre de spires enroulées sur la bobine et I le courant circulant dans cette bobine. On écrira donc:

$$Cab \cong \Phi_{ab} \cdot N \cdot I.$$

A courant constant, pour réduire les dimensions de la bobine et donc du moteur, on va diminuer le nombre de spires N mais parallèlement, comme le montre l'équation ci-dessus, il faudra augmenter d'autant la valeur du flux $\Phi_{ab}$ si l'on veut maintenir un même couple mutuel Cab. Dans le document cité, cette augmentation de flux est réalisée en utilisant deux rotors. Si chacun des aimants composant ses rotors développe un flux $\Phi_{ab}$, on pourra alors réduire de moitié le nombre de spires de la bobine selon l'expression

$$Cab \cong 2\Phi_{ab} \cdot \frac{N}{2} \cdot I.$$

De même et partant du même arrangement, si c'est la consommation du moteur qu'on vise à réduire, se sera le courant I que l'on réduira de moitié:

$$Cab \cong 2\Phi_{ab} \cdot N \cdot \frac{I}{2}.$$

Dans un cas comme dans l'autre, on s'aperçoit cependant que la diminution d'encombrement ou de consommation doit se payer par la diminution du nombre d'ampère-tours développé par la bobine ou si l'on veut par la diminution de l'induction magnétique créée par ce nombre d'ampère-tours. Cela n'ira pas sans avoir une influence défavorable sur la sécurité de marche du moteur alors beaucoup plus sensible à l'induction magnétique provoquée dans des champs parasites extérieurs à la pièce d'horlogerie.

Un moteur électromagnétique pas à pas du type classique à un seul rotor et équipant une montre est pourvu d'un aimant aux terres rares qui développe dans l'entrefer une induction magnétique de l'ordre de 0,25 tesla. La bobine de ce moteur, si le nombre d'ampère-tours en régime dynamique est de 3 ampères, ne développera qu'une induction magnétique de l'ordre de $10 \cdot 10^{-4}$ tesla. Cette dernière valeur déjà est équivalente à l'induction provoquée par des champs magnétiques parasites qui peuvent soit bloquer le moteur soit le faire accélérer. Dans un moteur à deux rotors, comme décrit plus haut, l'induction due aux aimants passera à 0,5 T alors que celle due à la bobine sera réduite à $5 \cdot 10^{-4}$ T si l'on veut bénéficier des avantages mentionnées. Ce type de moteur sera ainsi deux fois plus sensible aux champs magnétiques extérieurs.

Pour remédier à cet inconvénient, on a déjà proposé de protéger un moteur classique à un rotor au moyen d'écrans magnétiques qui canalisent le champ perturbateur en dehors du circuit magnétique du stator. Dans le cas d'un moteur à deux rotors on pourrait bien sûr proposer le même remède. On perdrait cependant l'avantage recherché puisque de tels blindages sont encombrants, coûteux et de fabrication difficile.

Ainsi, grâce aux moyens revendiqués, la présente invention propose un nouvel arrangement de moteur électromagnétique à deux rotors qui, sans recourir à des blindages magnétiques, soit insensible aux champs magnétiques perturbateurs extérieurs.

L'invention sera comprise maintenant à l'aide de la description qui suit et du dessin qui l'illustre à titre d'exemple, dessin dans lequel:

La figure 1 est une représentation schématique du moteur selon l'invention et selon une première forme d'exécution.

La figure 2 est une représentation schématique du moteur selon l'invention et selon une seconde forme d'exécution.

La figure 3 montre le moteur de la figure 1 soumis à des champs perturbateurs selon l'axe magnétique des pôles.

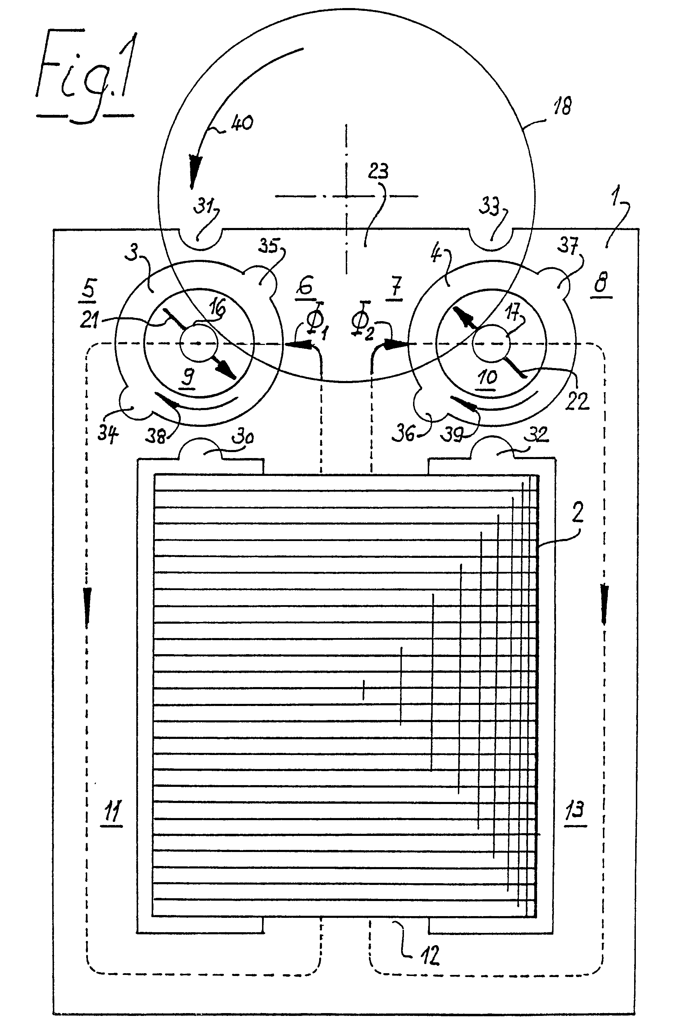

Le moteur électromagnétique représenté à la figure 1 est composé d'un stator 1 auquel est associé un noyau 12 sur lequel est bobiné un enroulement d'excitation 2. Dans le stator 1 sont découpées deux ouvertures 3, 4 qui définissent chacune une paire de pôles 5, 6 et 7, 8 respectivement. Le pôle 5 est séparé du pôle 6 par des isthmes saturables 30 et 31; le pôle 7 est séparé du pôle 8 par des isthmes saturables 32 et 33 comme cela est connu de l'état de la technique. Ces isthmes pourraient être remplacés par des entrefers. Les ouvertures 3 et 4 sont pourvues d'encoches 34, 35 et 36, 37 qui définissent une position de repos pour les rotors. Un rotor 9 est logé dans l'ouverture 3 et un rotor 10 est logé dans l'ouverture 4. Ces rotors sont des aimants permanents aimantés diamétralement. Chaque rotor est pourvu d'un pignon 16, respectivement 17 engrenant avec une même roue de transmission 18. Cette roue 18 est destinée à entraîner le mécanisme d'affichage de l'heure de la pièce d'horlogerie. Comme on le voit sur la figure 1 et selon l'invention, le circuit magnétique du stator (1, 11, 12, 13) est arrangé de manière à soumettre le rotor 9 à un flux $\Phi_1$ de sens opposé au flux $\Phi_2$ appliqué au rotor 10 quand on alimente l'enroulement d'excitation 2. Pour que les rotors soient entraînés dans le même sens, on comprendra que le calage réciproque des rotors 9 et 10 quant à leur sens d'aimantation soit celui montré sur la figure par les flèches 21 et 22. Si l'on suppose par example qu'une impulsion appliquée à l'enroulement 2 transforme les pièces polaires 6 et 7 en pôles nord, il faut que la pointe de la flèche 21 indiquant le nord de l'aimant soit dirigée vers le bas pour entraîner le rotor 9 dans le sens de la flèche 38, de même qu'il faut que la pointe de la flèche 22 indiquant le nord de l'aimant soit dirigée vers le haut pour entraîner le rotor 10 dans le sens de la flèche 39. Les deux rotors tournant dans le même sens transmettent alors leur couple sur la roue 18 qui tourne dans le sens inverse 40. On voit dans la figure 1 que le sens d'aimantation du premier rotor 9 est décalé de 180° par rapport au sens d'aimantation du second rotor 10. Ce décalage est opéré lors du montage des rotors respectifs, dans leurs ouvertures correspondantes.

Pour que le flux engendré par la bobine présente la configuration opposée voulue sur chacun des rotors, on a préféré l'arrangement représenté en figure 1 où le stator présente l'aspect du circuit magnétique d'un transformateur à trois colonnes référencées 11, 12 et 13. Ici, les ouvertures 3 et 4 sont découpées dans une des branches 23 reliant les trois colonnes et l'ouverture 3 est située entre la colonne 11 et la colonne 12 tandis que l'ouverture 4 est située entre la colonne 12 et la colonne 13. De plus, dans cette variante d'exécution, on n'a prévu qu'un seul enroulement bobiné sur la colonne centrale 12.

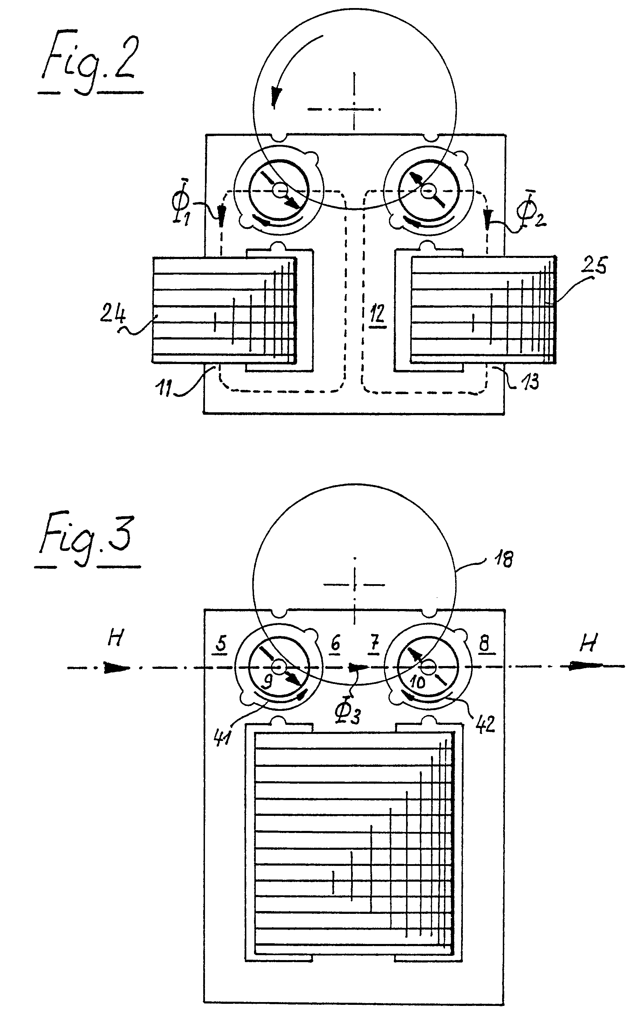

La figure 2 présente une seconde variante d'exécution du moteur selon l'invention. Dans cette réalisation, le circuit magnétique du moteur est semblable au circuit du moteur discuté plus haut. Il présente cependant deux enroulements 24 et 25 bobinés sur les colonnes 11 et 13. Il est évident cependant que le sens de bobinage est choisi pour provoquer la même configuration des flux opposés $\Phi_1$ et $\Phi_2$ que celle qui a été décrite à propos de la figure 1.

Les moteurs décrits dans les figures 1 et 2 présentent aussi les mêmes avantages de réduction d'encombrement ou de diminution de consommation que celui proposé dans le document JP-A-57 116 577 déjà cité puisqu'ils permettent, grâce au doublement de l'aimant, de diminuer par deux le nombre d'ampère-tours à fournir par l'enroulement. Cependant, la configuration nouvelle qu'ils présentent, particulièrement en ce qui concerne la répartition du flux magnétique dû à l'enroulement d'excitation les rendent insensibles aux champs magnétiques parasites extérieurs. La figure 3 explique le pourquoi.

Dans la figure 3, on a représente schématiquement le moteur de la figure 1 soumis à un champ perturbateur H qui s'exerce selon l'axe magnétique des pôles 5, 6 et 7, 8. Les rotors 9 et 10 sont alors soumis à un flux $\Phi_3$ qui s'exerce dans le même sens sur chacun d'eux. Comme le sens d'aimantation des rotors 9 et 10 est décalé de 180°, on comprendra que le rotor 9 sera entraîné dans un premier sens (flèche 41) et que le rotor 10 sera entraîné dans un second sens (flèche 42) opposé au premier. Ainsi, la roue de transmission commune 18 qui engrène avec les rotors 9 et 10 recevra deux couples de sens contraire d'où il ne résultera aucun mouvement de rotation de ladite roue 18.

Dans le cas où le champ perturbateur s'exerce selon un axe perpendiculaire à l'axe magnétique des pôles, on comprendra qu'il n'aura que peu d'influence sur les rotors car le flux produit va suivre la direction des colonnes sans toucher les régions où se trouvent situés les rotors. Si le champ perturbateur est oblique, il se décomposera entre une composante selon l'axe magnétique des pôles et une composante selon un axe perpendiculaire à l'axe des pôles et produira les mêmes effets que ceux qui viennent d'être discutés.

En conclusion de ce qui vient d'être expliqué, on constate que le moteur selon l'invention non seulement permet de réduire l'encombrement du moteur ou de réduire sa consommation, mais encore propose un transducteur qui soit particulièrement insensible aux champs perturbateurs extérieurs et cela sans avoir à faire appel à des écrans magnétiques protecteurs. Par rapport au document cité plus haut, le moteur selon l'invention apporte une amélioration décisive quant à la sécurité de fonctionnement. En effet, dans le moteur qui fait l'objet de cette citation, les deux rotors sont soumis à un flux de même sens lorsque la bobine est alimentée. Il s'ensuit qu'un flux parasite exercé dans l'axe des pôles ne manquera pas de développer un couple perturbateur de même sens sur chacun des rotors, ce qui aura pour conséquence d'entraîner la roue engrenant avec lesdits rotors.

**Revendications**

1. Moteur électromagnétique pas à pas monophasé pour pièce d'horlogerie comprenant un stator (1), au moins un enroulement d'excitation (2) bobiné sur un noyau (22) associé au stator, deux ouvertures (3, 4) découpées dans le stator et présentant chacune deux épanouissements polaires (5, 6, 7, 8) et un rotor (9, 10) logé dans chacune des deux ouvertures pour être soumis au flux crée par l'enroulement, lesdits rotors étant formés chacun d'un aimant permanent aimanté diamétralement et comportant chacun un pignon (16, 17) engrenant avec une même roue de transmission (18), caractérisé par le fait que le stator (1) est agencé de manière à soumettre le premier rotor (9) à un flux ($\Phi_1$) de sens sensiblement opposé au flux ($\Phi_2$) appliqué au second rotor (10) quand la bobine d'excitation (2) est alimentée et que le calage réciproque desdits premier et second rotors quant à leur sens d'aimantation (21, 22) est tel qu'ils tournent dans la même direction quand ils sont soumis auxdits flux de sens opposés.

2. Moteur électromagnétique selon la revendication 1, caractérisé par le fait que le stator (1) présente l'aspect du circuit magnétique d'un transformateur à trois colonnes (11, 12, 13) où lesdites ouvertures (3, 4) sont découpées dans une des branches (23) reliant les trois colonnes, la première ouverture (3) étant située entre la première (11) et la deuxième (12) colonne et la seconde ouverture (4) étant située entre la deuxième (12) et la troisième (13) colonne.

3. Moteur électromagnétique selon la revendication 2, caractérisé par le fait qu'il comporte un seul enroulement (2) bobiné sur la deuxième colonne (12).

4. Moteur électromagnétique selon la revendication 2, caractérisé par le fait qu'il comporte deux enroulements (24, 25) bobinés sur les première (11) et troisième (13) colonnes respectivement.

## Patentansprüche

1. Elektromagnetischer einphasiger Schrittmotor für Uhrwerke mit einem Stator (1), wenigstens einer Erregerspule (2), die auf einem mit dem Stator verbundenen Kern (12) aufgewickelt ist, mit zwei im Stator vorgesehenen Aussparungen (3, 4), deren jede zwei Polschuhe (5, 6, 7, 8) bilden und mit einem Rotor (9, 10) in jeder der beiden Aussparungen, der einem von der Wicklung erzeugten Fluss aussetzbar ist, wobei die Rotoren jeweils aus einem Permanentmagneten gebildet sind, der diametral magnetisiert ist und wobei jeder ein Ritzel (16, 17) aufweist, die in dasselbe Antriebsrad (18) eingreifen, dadurch gekennzeichnet, dass der Stator derart ausgestaltet ist, dass der erste Rotor (9) von einem Fluss ($\Phi_1$) beaufschlagt wird, dessen Richtung im wesentlichen entgegengesetzt ist zu dem den zweiten Rotor (10) beaufschlagenden Fluss ($\Phi_2$), wenn die Erregerspule (2) gespeist wird, und dass die gegenseitige Kopplung der beiden Rotoren bezüglich ihrer Magnetrichtungen (21, 22) derart ist, dass sie sich in gleicher Richtung drehen, wenn sie von den entgegengesetzten Flüssen beaufschlagt werden.

2. Elektromagnetischer Motor nach Anspruch 1, dadurch gekennzeichnet, dass der Stator (1) die Wirkung des Magnetkreises eines Transformators mit drei Armen (11, 12, 13) aufweist, wobei die Öffnungen (3, 4) in einer der die drei Arme verbindenden Brücken (23) derart vorgesehen sind, dass die erste Öffnung (3) zwischen dem ersten Arm (11) und dem zweiten Arm (12) angeordnet ist und die zweite Öffnung (4) zwischen dem zweiten (12) und dem dritten (13) Arm angeordnet ist.

3. Elektromagnetischer Motor nach Anspruch 2, dadurch gekennzeichnet, dass er eine einzige auf dem zweiten Arm (12) aufgewickelte Wicklung (2) aufweist.

4. Elektromagnetischer Motor nach Anspruch 2, dadurch gekennzeichnet, dass er zwei Wicklungen (24, 25) aufweist, die auf dem ersten Arm (11) bzw. dem dritten Arm (13) aufgewickelt sind.

## Claims

1. Single phase electomagnetic stepping motor for timepiece comprising a stator (1), at least one energizing winding (2) mounted on a core (12) associated with the stator, two openings (3, 4) cut into the stator each exhibiting two polar expansions (5, 6, 7, 8) and a rotor (9, 10) placed in each of the two openings so as to be subjected to the flux generated by the winding, said rotors each being formed by a diametrally magnetized permanent magnet and each bearing a pinion (16, 17) meshing with the transmission wheel (18) common to both, characterized by the fact that the stator (1) is arranged to subject the first rotor (9) to a flux ($\Phi_1$) the sense of which is essentially opposite to the flux ($\Phi_2$) applied to the second rotor (10) when the energizing winding (2) is energized, the mutual phase spread of said first and second rotors in respect of their sense of magnetization (21, 22) being such that they rotate in the same sense when subjected so said fluxes of opposed senses.

2. Electromagnetic motor as set forth in claim 1, characterized by the fact the the stator (1) exhibits the form of magnetic circuit of a three core transformer (11, 12, 13) in which said openings (3, 4) are cut into one of the legs (23) joining the three cores, the first opening being situated between the first (11) and the second (12) core and the second opening (4) being situated between the second (12) and the third (13) core.

3. Electromagnetic motor as set forth in claim 2, characterized by the cast that it comprises a single winding (2) wound on the second core (12).

4. Electromagnetic motor as set forth in claim 2, characterized by the fact that is comprises two windings (24, 25) wound respectively on the first (11) and third (13) cores.

Fig.1

0 143 227

5

_Fig.2_

$\vec{\phi}_1$

$\vec{\phi}_2$

24

25

11

12

13

_Fig.3_

18

H

H

5 6 7 8

9

10

41

$\vec{\phi}_3$

42